# EUROPÄISCHE PATENTSCHRIFT

(11) **EP 3 424 636 B1**
(45) Veröffentlichungstag und Bekanntmachung des Hinweises auf die Patenterteilung: **17.11.2021**
(21) Anmeldenummer: 18176517.3
(22) Anmeldetag: 07.06.2018
(51) Int. Cl.: B23K 26/035, B23K 26/044, B23K 37/02

(54) **SYSTEM ZUM LASERSCHWEISSEN, UMFASSEND EINE SCHUBVORRICHTUNG, EINE BEARBEITUNGSOPTIK UND MINDESTENS EINE TAKTILE FÜHRVORRICHTUNG**
LASER WELDING SYSTEM, COMPRISING A PROPULSION DEVICE, A PROCESSING LENS AND AT LEAST ONE TACTILE GUIDING DEVICE
SYSTÈME DE SOUDAGE LASER COMPRENANT UN DISPOSITIF POUSSEUR, UNE OPTIQUE D'USINAGE ET AU MOINS UN DISPOSITIF DE GUIDAGE TACTILE

(30) Priorität: 21.06.2017 DE 102017113652
(43) Veröffentlichungstag der Anmeldung: 09.01.2019
(73) Patentinhaber: Photon AG, 13581 Berlin (DE)
(72) Erfinder: NEUMANN, Steffen, 10707 Berlin (DE); ALDER, Holger, 13591 Berlin (DE); KRULL, Dietmar, 14641 Nauen (DE); REMPT, Michael, 14612 Falkensee (DE)
(74) Vertreter: Hertin und Partner Rechts- und Patentanwälte PartG mbB

(56) Entgegenhaltungen:
- WO-A1-2005/056230
- DE-A1- 19 817 629
- DE-C2- 19 817 629
- DE-U1- 8 713 471
- DE-U1- 20 216 219
- FR-A3- 2 947 747
- JP-A- H09 327 781

## Beschreibung

Die Erfindung betrifft ein System zum Laserschweißen umfassend eine Schubvorrichtung, eine Bearbeitungsoptik und mindestens eine taktile Führvorrichtung.

### Stand der Technik:

Im Stand der Technik sind verschiedene Fügetechniken bekannt, die unter der Bezeichnung "Schweißen" zusammengefasst werden. Beim Metall-Schweißen wird durch die Verbindung einer Stromquelle mit einer Metallelektrode ein Lichtbogen erzeugt und die zu verbindenden Werkstücke an den Verbindungsstellen durch einen gezielten Energieeintrag aufgeschmolzen. Gleichzeitig schmilzt die Metallelektrode ab und das abgeschmolzene Elektrodenmaterial dient als Schweißzusatz, das die Werkstücke miteinander verbindet. Die Förderung des Metallelektrodendrahts erfolgt mittels einem integrierten Drahtantrieb oder einem externen Drahtvorschub.

Das freie Ende der Metallelektrode ist üblicherweise von einer Gasausgangsdüse umgeben, die entweder Inertgas (Metall-Inertgas-Schweißen - MIG) oder Aktivgas (Metall-Aktivgas-Schweißen - MAG) abgibt, welches als Schutzgas fungiert. Das Schutzgas verhindert chemische Reaktionen des aufgeschmolzenen Werkstückmaterials mit der Umgebungsluft und seine Verwendung erhöht die Festigkeit des erhaltenen Schweißprodukts. Inerte Schutzgase, wie zum Beispiel die Edelgase Helium und Argon oder ihre Gemische, werden insbesondere für Metallverbindungen, außer für Stähle, verwendet, insbesondere für Aluminium und Kupfer. Aktivgase enthalten Zusätze von Sauerstoff und/oder Kohlenstoffdioxid und werden vor allem zum Verschweißen von Stählen verwendet. Das verwendete Schutzgas beeinflusst den Materialübergang zwischen der Metallelektrode und den zu verbindenden Werkstücken und die Gestalt der Schweißnaht, die darüber hinaus auch von der Gestalt des Lichtbogens und der Abschmelzleistung der Metallelektrode abhängt.

Darüber hinaus ist im Stand der Technik das WIG-Schweißen bekannt, bei dem eine nicht-abschmelzende, temperaturbeständige Wolframelektrode verwendet wird. Der mit dieser Wolframelektrode erzeugte Lichtbogen erwärmt und verflüssigt die zu verbindenden Werkstücke. Auch beim WIG-Schweißen wird ein Schutzgas eingesetzt, wobei üblicherweise inerte Gase, wie Argon, Helium oder deren Gemische, zum Einsatz kommen, so dass es sich um ein Wolfram-Inertgas-Schweißverfahren handelt (WIG).

Im Stand der Technik sind auch Laser-Schweißverfahren bekannt, bei der ein Laserstrahl mittels einer Bearbeitungsoptik auf die Verbindungsstelle zwischen zwei Werkstücken gerichtet wird. Der Laserstrahl erhitzt den Verbindungsbereich auf Verdampfungstemperatur und sorgt so für einen tiefen, schmalen Einbrand, d.h. Wärmeeintrag. Die zum Laser-Schweißen verwendeten Bearbeitungsoptiken werden mittels einer Roboteraufnahme mit einem Industrieroboter verbunden, welcher die Laseroptik an die gewünschte Position in Bezug auf das Schweißgut bringt und die Optik während des Schweißvorgangs bewegt und führt.

Um die Laseroptik vor Beschädigungen zu schützen, weisen diese üblicherweise ein Schutzglas auf, um die Optik vor praktisch nicht zu vermeidenden Schweißspritzern zu schützen.

Aus der WO 2005/056230 A1 ist ein System zum Laserschweißen eines Bauteils gemäß dem Oberbegriff des Anspruchs 1 bekannt.

Es ist demnach Aufgabe der vorliegenden Erfindung, ein System zum Laser-Schweißen bereitzustellen, mit dem weiter die Vorteile des Laserschweißens realisiert werden können, und das darüber hinaus ein besonders wirtschaftliches, und schnelles Schweißen ermöglicht, und zwar insbesondere auch an schwer zugänglichen Schweißgut-Bereichen. Des Weiteren soll mit dem erfindungsgemäßen Laser-Schweiß-System eine besonders feste Verbindung zwischen den Werkstücken erreicht werden, indem qualitativ hochwertige Schweißnähte erzeugt werden.

Gelöst wird diese Aufgabe mit einem System zum Z Laserschweißen nach Anspruch 1. Das System umfasst eine Schubvorrichtung, eine Bearbeitungsoptik und mindestens eine Z Führvorrichtung.

Die Bearbeitungsoptik liegt mit der Schubvorrichtung verbunden vor, wobei die Bearbeitungsoptik in Bezug auf die Schubvorrichtung drehbar und linear verschiebbar in mindestens einer Strahlachse zur Einstellung einer Fokusposition als Schweißnahtführung ausgebildet ist, wobei die mindestens eine Führvorrichtung starr mit der Bearbeitungsoptik verbunden vorliegt.

Eine Schubvorrichtung kann im Sinne der Erfindung bevorzugt ein Schweißtraktor sein. Dabei handelt es sich um eine selbstfahrende Vorrichtung, die mit der Bearbeitungsoptik verbunden vorliegt und diese zieht und/oder schiebt. Schweißtraktoren sind aus dem Bereich der konventionellen Schweißtechniken, wie dem MIG- oder WIG-Schweißen bekannt. Allerdings stellt es eine Abkehr vom Stand der Technik dar, Schubvorrichtungen, beispielsweise Schweißtraktoren, in Verbindung mit Laser-Schweiß-Optiken einzusetzen, da solche Optiken bisher üblicherweise immer in Verbindung mit Industrierobotern eingesetzt wurden und die Fachwelt davon ausging, dass Schubvorrichtungen für die Führung und Bewegung eine Laser-Schweiß-Optik nicht geeignet seien. Ein weiterer Vorteil einer bevorzugt selbstfahrenden Schubvorrichtung besteht darin, dass sich die Schubvorrichtung am Bauteil selbst führen kann und daher keiner externen Steuerung bedarf. Diese Selbstführung wird vorteilhafterweise durch die Führvorrichtung gewährleistet. Nach der Erfindung liegt die Führvorrichtung fest mit der Bearbeitungsoptik verbunden vor, wobei die Führvorrichtung bevorzugt taktil ausgebildet ist. Die bevorzugt taktile Führvorrichtung kann beispielsweise Sensoren umfassen, die die Umgebung der zu verbindenden Werkstücke erfasst und so den zukünftigen Weg des Laser-Schweißsystems bevorzugt aufgrund der ermittelten Daten bestimmt.

Es ist im Sinne der Erfindung insbesondere bevorzugt, dass die Führvorrichtung beziehungsweise die entsprechenden Sensoren nicht einfedernd mit der Bearbeitungsoptik verbunden vorliegen. Dadurch werden schwingungsbedingte Fehlsteuerungen und Abweichungen von einer Ideal-Naht wirksam vermieden.

Die Bearbeitungsoptik und die Schubvorrichtung sind bevorzugt so miteinander verbunden, dass die Bearbeitungsoptik in Bezug auf die Schubvorrichtung gedreht beziehungsweise verdreht werden kann, wodurch vorteilhafterweise die Fokuslage des durch die Bearbeitungsoptik abgegebenen Laserstrahls eingestellt werden kann. Es ist insbesondere bevorzugt, dass zwischen Bearbeitungsoptik und Schubvorrichtung ein Winkel α eingestellt werden kann, dessen Größe bevorzugt den Verstellungsgrad zwischen Schubvorrichtung und Bearbeitungsoptik angibt. Mit anderen Worten können Schubvorrichtung und Bearbeitungsoptik bevorzugt einen Winkel α miteinander einschließen. Die Einstellung des Fokus beziehungsweise der Fokusposition ermöglicht im Sinne der Erfindung bevorzugt die Steuerung des Brennpunktes des Laserstrahls, der von der Bearbeitungsoptik abgegeben wird, wobei der Brennpunkt bevorzugt den Ort der stärksten Energieübertragung durch den Laserstrahl an das Werkstück definiert. Indem die Bearbeitungsoptik drehbar mit der Schubvorrichtung verbunden vorliegt, kann der Fokus des Laserstrahls und dadurch der Ort der maximalen Energieübertragung besonders einfach und unkompliziert eingestellt werden.

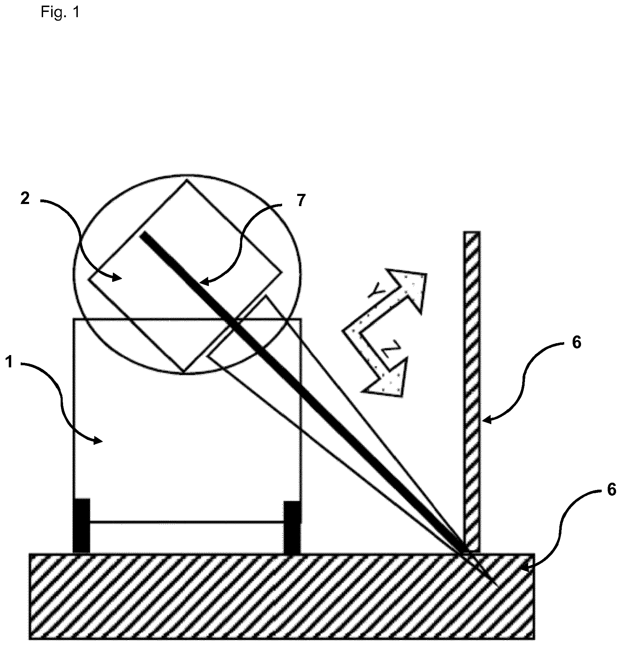

Darüber hinaus liegen Schubvorrichtung und Bearbeitungsoptik so miteinander verbunden vor, dass die Bearbeitungsoptik gegenüber der Schubvorrichtung in mindestens einer Strahlachse zur Einstellung einer Fokusposition als Schweißnahtführung ausgebildet ist. Dadurch kann die Schweißnaht zwischen den zu verbindenden Werkstücken besonders einfach geführt werden. Der Begriff "Strahlachse" bezeichnet im Sinne der Erfindung bevorzugt eine gedachte zentrale Achse innerhalb des von der Bearbeitungsoptik abgegebenen Laserstrahls. Es ist im Sinne der Erfindung bevorzugt, dass die lineare Verschiebung insbesondere spielfrei über ein Linearlager sichergestellt ist. Dieser Linearlagerung untergeordnet erfolgt vorzugsweise eine bevorzugt spielfreie rotative Lagerung über ein Wälzlagerung des gesamten Optiksystems. Vorzugsweise beschreibt der Begriff der "linearen Verschiebbarkeit" somit ein Annähern oder Entfernen der Schubvorrichtung von der Bearbeitungsoptik in dieser Strahlachse. In Figur 1 ist die Strahlrichtung beispielsweise als z-Richtung dargestellt, wobei die z-Richtung des Koordinatensystems vorzugsweise im Wesentlichen parallel zur Richtung des Laserstrahls verläuft. Es ist weiter bevorzugt, dass die x-Richtung des Koordinatensystems die Richtung angibt, in die sich die Schubvorrichtung bewegt, während die y-Richtung bevorzugt im Wesentlichen senkrecht auf der Achse des Laserstrahls steht.

Anders als die rotativ oder linear verstellbare Verbindung zwischen Bearbeitungsoptik und Schubvorrichtung ist die Verbindung zwischen der mindestens einen Führvorrichtung und der Bearbeitungsoptik starr ausgebildet. Dies bedeutet im Sinne der Verbindung bevorzugt, dass Führvorrichtung und Bearbeitungsoptik nicht zueinander verstellt werden können, sondern stets denselben Abstand und denselben Winkel, das heißt dieselbe Anordnung zueinander aufweisen und dass sich diese beiden Bestandteile des erfindungsgemäßen Systems vorzugsweise nur miteinander verschieben, verdrehen und/oder oder bewegen lassen. Es ist im Sinne der Erfindung insbesondere bevorzugt, dass das System zum Laserschweißen sowohl schwenkbar, als auch in der Strahlachse verschiebbar gelagert ist.

Tests haben gezeigt, dass durch die Verwendung des erfindungsgemäßen Systems überraschend kleine Verzüge der miteinander verbundenen Werkstücke erreicht werden. Das bedeutet, dass sich sie Werkstücke durch die Bearbeitung und Verbindung besonders wenig verziehen und aufwändige spätere Nachbearbeitung der Werkstücke entfallen kann. Insbesondere wurde in den Tests festgestellt, dass die Aufwendungen für das spätere Verspachteln der Werkstücke, das heißt das Aufbringen von Spachtelmasse auf die Werkstücke, um einen optisch glatten Oberflächeneindruck zu erzeugen, wesentlich reduziert werden können. Dies führt neben der Ersparnis an Arbeitszeit und Verbrauchsmaterial auch dazu, dass die Schweißprodukte leichter sind, als wenn sie aufwendig mit Spachtelmaterial nachbearbeitet werden müssen. Dadurch können die Waren, in denen wie Werkstücke eingesetzt werden, ebenfalls leichter werden, was mit großen Vorteilen verbunden ist, wenn es sich beispielweise um Produkte aus dem Transportbereich handelt, bei denen eine Gewichtsreduktion beispielweise auch zu einem reduzierten Energieverbrauch führt.

Ein weiterer Vorteil des erfindungsgemäßen Systems besteht darin, dass das Laserschweißen ohne die Anwesenheit einer Schutzatmosphäre erfolgen kann. Dadurch wird der Schweißprozess deutlich vereinfacht und die erzeugten Produkte können günstiger an den Kunden abgegeben werden. Auch müssen die Schutzgläser zum Schutz der Laserbearbeitungsoptik beim Laserschweißen mit dem erfindungsgemäßen System überraschenderweise nicht mehr so oft ausgetauscht werden.

Der Laserschweißprozess wird auch dadurch vereinfacht, dass beim Laserschweißen mit dem erfindungsgemäßen System, anders als beim konventionellen Schweißen und anders als bei der Führung von Laserschweißsystem durch Industrieroboter, nicht mehr jede Naht einzeln eingeteacht werden muss. Dies wird dadurch erreicht, dass sich die die Schubvorrichtung vorteilhafterweise selbst in Bezug auf die zu verbindenden Bauteile führt.

Die Erfindung ermöglicht ein Verfahren zum Laser-Schweißen, insbesondere zur Führung einer Schweißnaht beim Laserschweißen, umfassend die folgenden Schritte
- Bereitstellung einer Schubvorrichtung
- Bereitstellung einer Bearbeitungsoptik, wobei die Bearbeitungsoptik die Bearbeitungsoptik in Bezug auf die Schubvorrichtung drehbar und linear verschiebbar in mindestens einer Strahlachse zur Einstellung einer Fokusposition als Schweißnahtführung ausgebildet ist
- Bereitstellung mindestens einer Führvorrichtung, die starr mit der Bearbeitungsoptik verbunden vorliegt,
- Erzeugung einer linienförmigen Verbindung zwischen zwei Werkstücken, indem mittels der Bearbeitungsoptik ein Laserstrahl auf einen Verbindungsbereich zwischen den Werkstücken übertragen wird
- Erzeugung einer Schweißnaht, indem die Schubvorrichtung die Bearbeitungsoptik entlang der linienförmigen Verbindung bewegt, wobei die Schubvorrichtung und/oder die Bearbeitungsoptik von der Führvorrichtung geführt wird.

Die technischen Wirkungen und Vorteile des erfindungsgemäßen Systems zum Laserschweißen gelten analog für das Verfahren, und umgekehrt.

Ein wesentlicher Vorteil des Laserschweißens besteht darin, dass aufgrund der nicht mehr erforderlichen zusätzlichen Materialzufuhr, beispielsweise in Form einer abschmelzenden Schweißelektrode, einerseits Material gespart wird, andererseits leichtere Werkstücke erzeugt werden können. Beispielsweise können im Vergleich zu einer MAG-Naht über 90 % Zusatzwerkstoff eingespart werden.

Ein weiterer Vorteil besteht darin, dass die Schweißgeschwindigkeit beim Laserschweißen im Vergleich zum MAG-Schweißen wesentlich erhöht werden kann. Tests haben gezeigt, dass mit dem erfindungsgemäßen System beziehungsweise mit dem erfindungsgemäßen Verfahren eine Verdreifachung der Schweißgeschwindigkeit erreicht werden kann.

Darüber hinaus ermöglicht das erfindungsgemäße System beziehungsweise das Verfahren eine besonders stabile Qualität der Schweißnaht, was sich sowohl optisch, als auch bei Belastungstests zeigt. Insbesondere werden einseitige Schweißungen vermieden, sowie Fehlpositionierungen in Bezug auf Winkel zwischen den zu verbindenden Werkstücken und Höhenlage.

Es ist im Sinne der Erfindung bevorzugt, dass vorzugsweise zwei Werkstücke durch Laser-Schweißen miteinander verbunden werden. Dazu weisen die Werkstücke vorteilhafterweise einander korrespondierende Verbindungsflächen auf, die vorzugsweise durch eine Schweißnaht miteinander verbunden werden.

Es ist im Sinne der Erfindung darüber hinaus bevorzugt, dass die Führvorrichtung von einem Führfinger oder einem Führtaster gebildet wird. Dabei kann das System eine oder mehrere Führvorrichtungen umfassen, die vorzugsweise taktil ausgebildet sein können. Je nach Anordnung und Ausgestaltung der Führvorrichtung(en) kann das System in einer bevorzugten Ausführungsform so eingerichtet sein, dass die Schweißnahtführung vorlaufend und/oder nachlaufend erfolgt. Mit anderen Worten kann es bevorzugt sein, dass das System so eingerichtet ist, dass die Bearbeitungsoptik einem Schweißprozess nachgeführt wird, wobei diese Nachführung vor- und/oder nachlaufend ausgestaltet sein kann.

Es ist im Sinne der Erfindung bevorzugt, dass eine vorlaufende Schweißnahtführung beispielsweise von einem dem aktuellen Schweißort vorlaufenden Führfinger realisiert wird, der den Bereich der zu verbindenden Werkstücke abtastet und die Bearbeitungsoptik des Laserschweißsystems durch die so ermittelten Daten an die gewünschten Schweißorte führt. Analog kann eine nachlaufende Schweißnahtführung durch eine dem aktuellen Schweißort nachgeführte Führvorrichtung realisiert werden, wobei sowohl eine nachlaufende, als auch eine vorlaufende Schweißnahtführung gewährleistet werden kann, wenn das System zum Laser-Schweißen mehr als eine Führvorrichtung umfasst. Der Begriff "taktil" bedeutet im Sinne der Erfindung bevorzugt, dass die Führvorrichtung durch Abtasten die Daten zur Steuerung und/oder Führung der Schweißnaht ermittelt.

In einer bevorzugten Ausgestaltung der Erfindung ist die Führvorrichtung adaptiv ausgebildet ist. Dies bedeutet im Sinne der Erfindung bevorzugt, dass die Führvorrichtung auf veränderte Ausgangssituationen reagieren und die Führung der Schweißnaht entsprechend anpassen kann. Es ist im Sinne der Erfindung insbesondere bevorzugt, dass der Begriff "adaptiv" bedeutet, dass die Bearbeitungsoptik als Einheit den möglichen Bauteiltoleranzen zwangsweise folgt und sich dadurch auf diese "adaptiert", d.h. einstellt. Dies gilt bevorzugt gleichermaßen auch für die im Prozess entstehende Toleranzen, wie Schweißverzüge oder von außen aufgebrachte Verformungen durch sonstige Vorrichtungen.

Die so erreichte Anpassungsfähigkeit der Führungsvorrichtung ist besonders vorteilhaft, wenn das System in einem automatischen Nutzungsmodus verwendet werden und möglichst ohne Fremdintervention, beispielweise durch einen menschlichen Nutzer, optimale Schweißnahtergebnisse erzielen soll. Ein Laserschweiß-System mit adaptiver Führvorrichtung ist im Stand der Technik nicht bekannt, weil Laserschweiß-Optiken üblicherweise mit Industrierobotern eingesetzt werden, also vorzugsweise ohne Schubvorrichtung im Sinne dieser Erfindung, und die Schubvorrichtung bei konventionellen Schweißtechniken nicht adaptiv ausgebildet sein muss.

Es ist in einer weiteren bevorzugten Ausführungsform der Erfindung bevorzugt, dass die Führvorrichtung so eingerichtet ist, dass die Schweißnaht taktil abgefragt wird. Dies ist vorteilhafterweise durch die feste Verbindung zwischen Führungskontakt und Laseroptik sichergestellt. Es ist insbesondere bevorzugt, dass sich durch die Andruckkraft eine Zwangsführung des Gesamtsystems ergibt. Es ist im Sinne der Erfindung darüber hinaus bevorzugt, dass der Führungskontakt als Führungsstift ausgebildet ist. Alternativ dazu kann es bevorzugt sein, dass die Führvorrichtung so eingerichtet ist, dass die Schweißnahtführung die Anwendung eines Offsets in yund/ oder z-Richtung umfasst (vgl. Fig. 1). Ein Offset ist im Sinne der Erfindung eine bewusst und absichtlich angewendete Verschiebung der Schweißnahtführung um einen festen oder zeitlich veränderlichen Wert. Es ist im Sinne der Erfindung besonders bevorzugt, dass die Schweißnaht in y- und/oder z-Richtung um einen Offset verschoben wird, wobei das entsprechende Koordinatensystem insbesondere in Figur 1 dargestellt ist.

In einer bevorzugten Ausführungsform der Erfindung ist es insbesondere bevorzugt, dass das System so eingerichtet ist, dass die Bearbeitungsoptik als Einheit zur Schweißnaht geführt wird. Durch diese bevorzugte Führung des gesamten Optiksystems zur Schweißnaht wird eine besonders hohe Positioniergenauigkeit gewährleistet, wobei Abweichungen beispielsweise im Bereich von wenigen Zehntel Millimetern liegen. Es ist im Sinne der Erfindung insbesondere bevorzugt, dass die komplette Bearbeitungsoptik an die Schubvorrichtung, zum Beispiel den Schweißtraktor, montiert wird.

In einer weiteren bevorzugten Ausführungsform ist das System so eingerichtet, dass die Bearbeitungsoptik der Schweißnaht und/oder einem Schweißstoß nachgeführt wird, wobei diese Nachführung vor- und/oder nachlaufend ausgestaltet sein kann.

Es ist darüber hinaus bevorzugt, dass das System ein mindestens Führungslager umfasst, um Bauteiltoleranzen, Toleranzen durch Verzüge und/oder Toleranzen in der Führungsvorrichtung auszugleichen.

In einer weiteren bevorzugten Ausgestaltung umfasst das System eine Regelungsvorrichtung zur Einstellung der Anordnung der Bearbeitungsoptik in Bezug auf die Schubvorrichtung. Es ist im Sinne der Erfindung bevorzugt, dass diese Regelungsvorrichtung in der Schubvorrichtung und/oder in der Bearbeitungsoptik angeordnet vorliegt und die Einstellung des Winkels und des Abstandes zwischen Schubvorrichtung und Bearbeitungsoptik zueinander regelt. Diese Einstellungen werden im Sinne der Erfindung bevorzugt als rotative und lineare Einstellung von Schubvorrichtung und Bearbeitungsoptik zueinander bezeichnet beziehungsweise als Drehbarkeit und lineare Verschiebbarkeit in der Strahlachse. Es ist im Sinne der Erfindung insbesondere bevorzugt, dass sich durch das bevorzugt zwangsweise Führen der Optik der Fokusabstand und die Lage des Fokus in Bezug auf den Schweißstoß selbständig auf einen vorher eingestellten Sollwert einregeln. Die Bewegung oder eine Unregelmäßigkeit des Bauteiles kann vom Führkontakt erfasst werden, wodurch vorteilhafterweise eine Ausgleichsbewegung des Optiksystems relativ zum Erfassungsort ermittelt und/oder ausgeführt werden kann.

Die Erfindung wird anhand der nachfolgenden Figuren näher beschrieben; es zeigt:
- Figur 1: Darstellung einer Vorderansicht einer bevorzugten Ausführungsform der Erfindung
- Figur 2: Darstellung einer Seitenansicht einer bevorzugten Ausführungsform der Erfindung

Figur 1 zeigt die Darstellung einer Vorderansicht einer bevorzugten Ausführungsform der Erfindung, insbesondere des Systems zum Laserschweißen. Die schraffierten Gegenständen unten und rechts in der Figur stellen beispielhaft die zu verbindenden Werkstücke (6) dar, die beispielsweise in einem rechten Winkel zueinander angeordnet vorliegen können und entsprechend miteinander verbunden werden sollen. Figur 1 zeigt insbesondere eine beispielhafte Schubvorrichtung (1), die von vorne, also von der Richtung, in die sich die Schubvorrichtung (1) bewegt, dargestellt ist. Darüber hinaus zeigt Figur 1 die Bearbeitungsoptik (2), die drehbar und linear verschiebbar in Bezug auf die Schubvorrichtung (1) ausgebildet ist. Dabei kann mittels der Drehbarkeit beziehungsweise der Schwenkbarkeit um einen Winkel vorteilhafterweise die Fokuslage des Laserstrahls, der auf den Verbindungsbereich der Werkstücke (6) gelenkt wird, eingestellt werden. Die lineare Verschiebbarkeit in mindestens einer Strahlachse ermöglicht vorteilhafterweise die Führung der Schweißnaht, die durch den Schweißvorgang erzeugt wird und durch die die Werkstücke (6) miteinander verbunden werden. Es ist bevorzugt, dass das System auch eine Regelungsvorrichtung (5) umfasst, mit der beispielweise der Winkel zwischen Bearbeitungsoptik (2) und Schubvorrichtung (1) eingestellt werden kann. In diesem Fall kann die Regelungsvorrichtung (5) im Sinne der Erfindung bevorzugt auch als Winkelregelung bezeichnet werden. Die Winkelregelung ist in Figur 1 durch den gebogenen Pfeil oberhalb der Abbildung des Systems angedeutet.

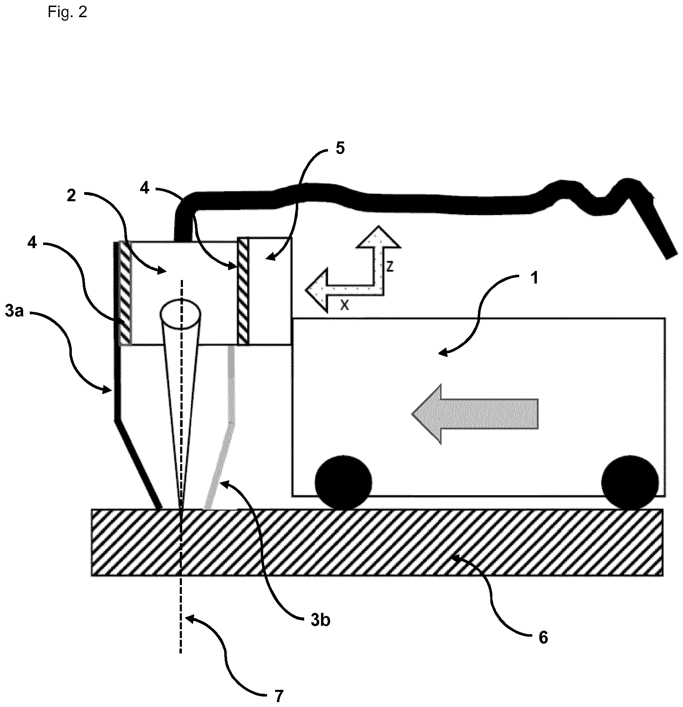

Figur 2 zeigt die Darstellung einer Seitenansicht einer bevorzugten Ausführungsform der Erfindung. Dargestellt ist eine Schubvorrichtung (1) in ihrer bevorzugten Ausgestaltung als Schweißtraktor, eine Bearbeitungsoptik (2), die schwenkbar und linear verschiebbar daran montiert vorliegt, und eine Regelungsvorrichtung (5), die zwischen der Bearbeitungsoptik (2) und der Schubvorrichtung (1) angeordnet vorliegen kann. Figur 2 zeigt weiter die mindestens eine Führvorrichtung (3), die starr mit der Bearbeitungsoptik (2) verbunden vorliegt und insbesondere taktil ausgebildet sein kann. Diese Verbindung ist in der Figur 2 mit dem Bezugszeichen 4 versehen. Dargestellt in Figur 2 sind insbesondere zwei Führvorrichtungen (3), wobei die Führungsvorrichtung 3a vorlaufend und die Führungsvorrichtung 3b nachlaufend in Bezug auf den Laserstrahl, der zwischen den beiden Ausführungsformen als stilisiertes

Dreieck dargestellt ist, angeordnet ist. Es ist bevorzugt, dass das System eine oder zwei Führvorrichtungen (3) aufweist. Der Pfeil, der in der Schubvorrichtung (1) eingezeichnet ist, gibt die Schweißrichtung an, also vorzugsweise die Richtung, in die sich die Schubvorrichtung (1) bewegen kann. Wie aus Figur 2 hervorgeht, entspricht die Schweißrichtung bevorzugt der x-Achse des Koordinatensystems. Die z-Richtung des Koordinatensystems verläuft in einer besonders bevorzugten Ausführungsform der Erfindung im Wesentlichen parallel zu der Brennachse (7) des Laserstrahls, während die y-Achse bevorzugt im Wesentlichen senkrecht auf der Richtung des Laserstrahls steht. Die Angaben "vorlaufend" und "nachlaufend" beziehen sich darauf, dass die Schubvorrichtung (1) in Bildrichtung "nach links" bewegt, also tatsächlich die Bearbeitungsoptik (2) vor sich herschiebt. Es kann aber im Sinne der Erfindung ebenso bevorzugt sein, dass sich die Schubvorrichtung (1) in Bildrichtung "nach rechts" bewegt, also die Bearbeitungsoptik (2) bevorzugt hinter sich herzieht.

### Bezugszeichenliste:

- 1: Schubvorrichtung
- 2: Bearbeitungsoptik
- 3: Führvorrichtung
- 4: Starre Verbindung zwischen Führvorrichtung und Bearbeitungsoptik
- 5: Regelvorrichtung
- 6: Zu verbindende Werkstücke
- 7: Brennachse des Laserlichtstrahls

## Patentansprüche

1. System zum Laserschweißen eines Bauteils, umfassend eine Schubvorrichtung (1), eine Bearbeitungsoptik (2) und mindestens eine Führvorrichtung (3), wobei die Bearbeitungsoptik (2) mit der Schubvorrichtung (1) verbunden vorliegt, wobei die Bearbeitungsoptik (2) in Bezug auf die Schubvorrichtung (1) drehbar und linear verschiebbar in mindestens einer Strahlachse (7) zur Einstellung einer Fokusposition als Schweißnahtführung ausgebildet ist, wobei die mindestens eine Führvorrichtung (3) starr mit der Bearbeitungsoptik (2) verbunden vorliegt, wobei die Schubvorrichtung (1) eine selbstfahrende Vorrichtung ist, **dadurch gekennzeichnet, dass** die Schubvorrichtung die Bearbeitungsoptik zieht und/oder schiebt und die Führvorrichtung eine Selbstführung der Schubvorrichtung an dem Bauteil gewährleistet.

2. System zum Laserschweißen nach Anspruch 1
**dadurch gekennzeichnet, dass** die Schubvorrichtung (1) ein Schweißtraktor ist.

3. System zum Laserschweißen nach Anspruch 1 oder 2 **dadurch gekennzeichnet, dass** das System so eingerichtet ist, dass die Schweißnahtführung vorlaufend und / oder nachlaufend erfolgt.

4. System zum Laserschweißen nach einem der vorhergehenden Ansprüche
**dadurch gekennzeichnet, dass**
das System so eingerichtet ist, dass die Bearbeitungsoptik (2) als Einheit zur Schweißnaht geführt wird.

5. System zum Laserschweißen nach einem der Ansprüche 1 bis 3 **dadurch gekennzeichnet, dass**
das System so eingerichtet ist, dass die Bearbeitungsoptik (2) der Schweißnaht oder einem Schweißstoß nachgeführt wird.

6. System zum Laserschweißen nach einem vorhergehenden Ansprüche
**dadurch gekennzeichnet, dass**
das System mindestens ein Führungslager umfasst.

7. System zum Laserschweißen nach einem vorhergehenden Ansprüche
**dadurch gekennzeichnet, dass**
die Führvorrichtung (3) so eingerichtet ist, dass die Schweißnaht taktil abgefragt wird.

8. System zum Laserschweißen nach einem der Ansprüche 1 bis 6 **dadurch gekennzeichnet, dass**
die Führvorrichtung (3) so eingerichtet ist, dass die Schweißnahtführung die Anwendung eines Offsets in y- und/oder z-Richtung umfasst.

9. System zum Laserschweißen nach einem der vorhergehenden Ansprüche
**dadurch gekennzeichnet, dass**
das System eine Regelungsvorrichtung (5) umfasst zur Einstellung der Anordnung der Bearbeitungsoptik (2) in Bezug auf die Schubvorrichtung (1).

10. System zum Laserschweißen nach Anspruch 6
**dadurch gekennzeichnet, dass**
das Führungslager eingerichtet ist, Toleranzen auszugleichen.

## Claims

1. A system for laser welding a component, comprising a thrust device (1), a processing optics (2), and at least one guiding device (3), wherein
the processing optics (2) is provided connected to the thrust device (1),
wherein the processing optics (2) is designed to be rotatable in relation to the thrust device (1) and linearly displaceable in at least one beam axis (7) to set a focal position as a weld seam guide,
wherein the at least one guiding device (3) is provided rigidly connected to the processing optics (2), wherein the thrust device (1) is a self-propelled device,
**characterized in that**
the thrust device pulls and/or pushes the processing optics and the guiding device ensures self-guiding of the thrust device on the component.

2. The system for laser welding as claimed in claim 1 **characterized in that**
the propulsion device (1) is a welding tractor.

3. The system for laser welding as claimed in claim 1 or 2 **characterized in that**
the system is configured so that the weld seam guiding takes place in a leading and/or trailing manner.

4. The system for laser welding as claimed in any one of the preceding claims
**characterized in that**
the system is configured so that the processing optics (2) is guided as a unit with respect to the weld seam.

5. The system for laser welding as claimed in any one of claims 1 to 3
**characterized in that**
the system is configured so that the processing optics (2) trails the weld seam or a butt weld.

6. The system for laser welding as claimed in any one of the preceding claims
**characterized in that**
the system comprises at least one guide bearing.

7. The system for laser welding as claimed in any one of the preceding claims
**characterized in that**
the guiding device (3) is configured so that the weld seam is scanned in a tactile manner.

8. The system for laser welding as claimed in any one of claims 1 to 6
**characterized in that**
the guiding device (3) is configured so that the weld seam guiding comprises the application of an offset in the y and/or z direction.

9. The system for laser welding as claimed in any one of the preceding claims
**characterized in that**
the system comprises a regulating device (5) for setting the arrangement of the processing optics (2) in relation to the propulsion device (1).

10. The system for laser welding as claimed in claim 6 **characterized in that**
the guide bearing is configured to compensate for tolerances.

## Revendications

1. Système de soudage laser d'un composant, comprenant un dispositif pousseur (1), une optique d'usinage (2) et au moins un dispositif de guidage (3), dans lequel l'optique d'usinage (2) est reliée au dispositif pousseur (1), dans lequel l'optique d'usinage (2) est conçue de manière à pouvoir tourner et à pouvoir être déplacée linéairement par rapport au dispositif pousseur (1) dans au moins un axe de faisceau (7) pour régler une position focale en tant que guidage de cordon de soudure, dans lequel l'au moins un dispositif de guidage (3) est relié de manière rigide à l'optique d'usinage (2), dans lequel le dispositif pousseur (1) est un dispositif automoteur, **caractérisé en ce que** le dispositif pousseur tire et/ou pousse l'optique d'usinage et le dispositif de guidage assure un guidage automatique du dispositif pousseur sur le composant.

2. Système de soudage laser selon la revendication 1 caractérisé en ce quele dispositif pousseur (1) est un tracteur de soudage.

3. Système de soudage laser selon la revendication 1 ou 2, **caractérisé en ce que** le système est configuré de sorte que le guidage du cordon de soudure est effectué vers l'avant et/ou vers l'arrière.

4. Système de soudage laser selon une revendication précédente, **caractérisé en ce que** le système est configuré de sorte que l'optique d'usinage (2) est guidée en tant qu'unité vers le cordon de soudure.

5. Système de soudage laser selon l'une des revendications 1 à 3, **caractérisé en ce que** le système est configuré de sorte que l'optique d'usinage (2) suit le cordon de soudure ou un joint de soudure.

6. Système de soudage laser selon l'une des revendications précédentes, **caractérisé en ce que** le système comprend au moins un palier de guidage.

7. Système de soudage laser selon l'une des revendications précédentes, **caractérisé en ce que** le dispositif de guidage (3) est configuré de sorte que le cordon de soudure est interrogé tactilement.

8. Système de soudage laser selon l'une des revendications 1 à 6, **caractérisé en ce que** le dispositif de guidage (3) est configuré de sorte que le guidage du cordon de soudure comprend l'application d'un décalage dans la direction y et/ou z.

9. Système de soudage laser selon l'une des revendications précédentes, **caractérisé en ce que** le système comprend un dispositif de régulation (5) pour régler la disposition de l'optique d'usinage (2) par rapport au dispositif pousseur (1).

10. Système de soudage laser selon la revendication 6, **caractérisé en ce que** le palier de guidage est configuré pour compenser les tolérances.
